# EUROPEAN PATENT APPLICATION

(11) **EP 4 335 579 A1**
(43) Date of publication of application: **13.03.2024**
(21) Application number: 23754997.7
(22) Date of filing: 16.02.2023
(51) Int. Cl.: B23F 5/04, B23Q 11/10, B24B 55/02

(54) **METHOD FOR GRINDING TOOTH FLANK OF GEAR WORKPIECE, AND GEAR GRINDING MACHINE**

(30) Priority: 18.02.2022 JP 2022023999
(71) Applicant: Nagase Integrex Co., Ltd., Seki-shi, Gifu-ken 501-2697 (JP)
(72) Inventor: SHINDO, Ryota, Seki-shi, Gifu 501-2697 (JP); MURASE, Nobuyoshi, Seki-shi, Gifu 501-2697 (JP); YOSHIDA, Hidetaka, Seki-shi, Gifu 501-2697 (JP)
(74) Representative: Petraz, Gilberto Luigi
(86) International application number: PCT/JP2023/005527
(87) International publication number: WO 2023/157932

(57) **Abstract**

A gear grinding machine uses a grindstone tool (21), having an outer circumference that includes a thread (24), to grind a tooth surface (27) of a gear workpiece (23). In this case, coolant (100) is supplied toward the tooth surface (27) from a trailing side in a rotation direction of the gear workpiece (23) through a space (101) between the grindstone tool (21) and the gear workpiece (23). The coolant (100) is drawn into the meshing portion between the grindstone tool (21) and the gear workpiece (23) by the rotation of the gear workpiece (23) and the movement of the thread (24) of the grinding tool (21).

## Description

### TECHNICAL FIELD

The present disclosure relates to a grinding method for grinding tooth surfaces of a gear workpiece using a threaded grindstone (hereinafter referred to as a grindstone tool) that has an outer circumferential surface including a grinding thread. The present disclosure also relates to a gear grinding machine on which the grinding method is performed.

### BACKGROUND ART

To grind a gear workpiece using a gear grinding machine, a grindstone tool and the gear workpiece are rotated in a state in which a thread on the outer circumferential surface of the grindstone tool is meshed with the teeth of the gear workpiece, which have been cut by a hobbing machine or the like. The rotation in the meshed state allows tooth surfaces of the gear workpiece to be ground by the thread of the grindstone tool. The grinding improves the surface roughness of the tooth surfaces of the gear workpiece.

To grind the gear workpiece, coolant is supplied to the outer circumferential surface of the grindstone tool from above in the axial direction of the gear workpiece as disclosed in Patent Literature 1 and Patent Literature 2. The coolant follows rotation of the grindstone tool to reach a meshing portion between the gear workpiece and the grindstone tool.

### CITATION LIST

### Patent Literature

Patent Literature 1: Japanese Laid-Open Patent Publication No. 2015-42445
Patent Literature 2: Japanese Laid-Open Patent Publication No. 2016-163912

### SUMMARY OF INVENTION

### Technical Problem

However, as described above, since coolant is supplied from above in the axial direction of the gear workpiece, most of the coolant is scattered around the gear workpiece by the rotation of the gear workpiece. Thus, only some of the coolant reaches the meshing portion so that the amount of the coolant supplied to the meshing portion decreases. In this manner, if the amount of the coolant decreases, lubrication between the grindstone tool and the gear workpiece may be insufficient, resulting in adverse effects on the grinding accuracy. Additionally, the gear workpiece and the grindstone tool may be overheated so that the tooth surfaces of the gear workpiece may be altered.

To solve this problem, the amount of the coolant supplied to the meshing portion per unit time is conventionally increased. In other words, even if a relatively large amount of the coolant is uselessly scattered around the gear workpiece, a sufficient amount of the coolant is supplied to the meshing portion between the grindstone tool and the gear workpiece.

Thus, the conventional mechanism of supplying coolant to the gear grinding machine processes a relatively large amount of the coolant and is thus accordingly increased in size. This increases the size of the entire gear grinding machine, necessitating a larger installation area within the factory.

### Solution to Problem

An aspect of the present disclosure provides a grinding method for grinding a tooth surface of a gear workpiece using a gear grinding machine. The gear grinding machine includes a grindstone tool having an outer circumference that includes a grinding thread. The grinding method includes grinding the tooth surface by rotating the grindstone tool and the gear workpiece in a state in which the thread is meshed with teeth of the gear workpiece, and supplying coolant toward the tooth surface from a trailing side in a rotation direction of the gear workpiece through a space between the gear workpiece and the grindstone tool, the space being located on a meshing start side of a meshing portion between the thread and the teeth.

Another aspect of the present disclosure provides a gear grinding machine that includes a grindstone tool having an outer circumference that includes a grinding thread, and a coolant discharge member having a tip that includes a discharge port that discharges coolant. The gear grinding machine is configured to grind a tooth surface of the gear workpiece by rotating the grindstone tool and the gear workpiece in a state in which the thread is meshed with teeth of the gear workpiece and supply the coolant from the discharge port to a meshing portion between the thread and the teeth. The discharge port is located on a meshing start side of the meshing portion between the thread and the teeth, the discharge port being configured to supply coolant toward the tooth surface from a trailing side in a rotation direction of the gear workpiece through a space between the gear workpiece and the grindstone tool.

Coolant is supplied from the trailing side in the rotation direction of the gear workpiece to the tooth surfaces of the gear workpiece through a space on the meshing side between the teeth of the gear workpiece and the thread of the grindstone tool. Thus, the coolant is drawn into the meshing portion by the rotation of the gear workpiece and the movement of the thread in the axial direction of the grindstone tool, which is caused by the rotation of the grindstone tool. This reduces the amount of the coolant scattered around the gear workpiece of the coolant. Thus, even if the amount of the coolant supplied is relatively small, a sufficient amount of coolant is supplied to the meshing portion. Consequently, lubrication, cooling, chip discharge, and the like are effectively performed. Since the amount is the coolant supplied is reduced, the output of a driving motor used to supply coolant is relatively small and a coolant cooling apparatus is relatively small. This reduces the size of the coolant supply mechanism of the gear grinding machine.

As a result, the entire gear grinding machine is reduced in size, thereby reducing the area occupied by the gear grinding machine in a factory.

### BRIEF DESCRIPTION OF DRAWINGS

Fig. 1 is a perspective view of a grinding machine.
Fig. 2 is a perspective view illustrating a grinding state in a first embodiment.
Fig. 3 is a cross-sectional plan view illustrating the grinding state.
Fig. 4 is a side view illustrating the relationship between the meshing portion and the discharge port.
Fig. 5 is a graph showing the power consumption in the embodiment and the prior art.
Fig. 6 is a schematic diagram showing the gear grinding machine in which the embodiment is employed.
Fig. 7 is a schematic diagram showing the gear grinding machine in which the prior art is employed.
Fig. 8 is a perspective view illustrating a grinding state in a second embodiment.
Fig. 9 is a cross-sectional plan view illustrating the grinding state.
Fig. 10 is a perspective view, with a part cut away, showing a third embodiment.

### DESCRIPTION OF EMBODIMENTS

### First Embodiment

A first embodiment of the present disclosure will now be described. In the first embodiment, the gear workpiece in which its tooth surfaces are ground is a spur gear having straight teeth that are external teeth.

### Configuration of Gear Grinding Machine

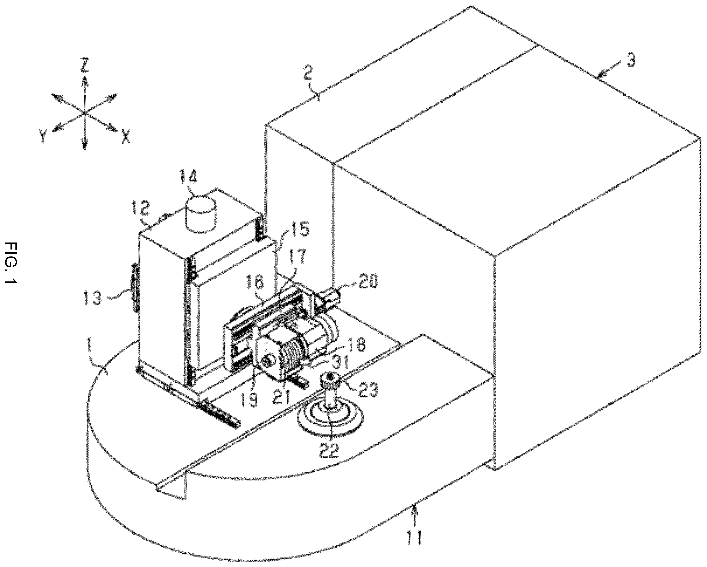

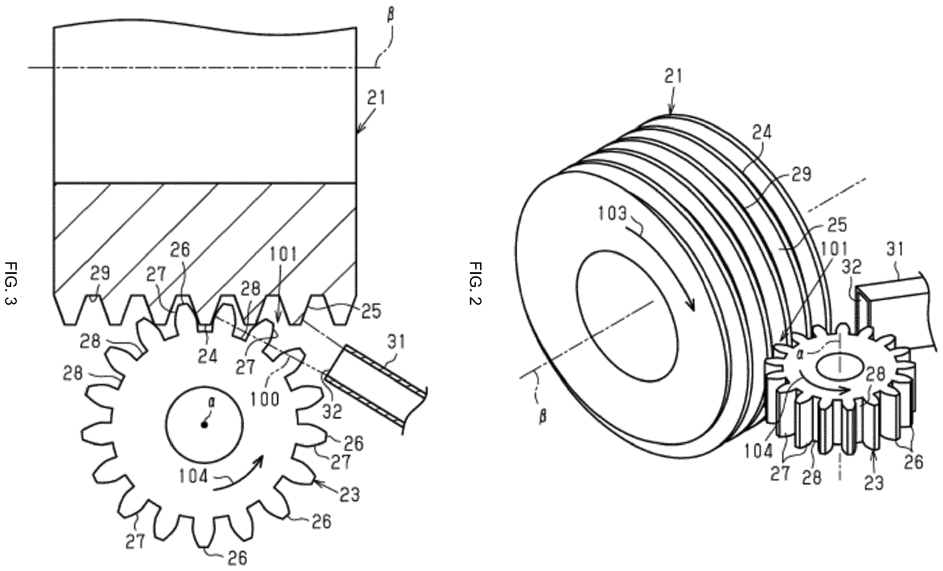

As shown in Fig. 1, a gear grinding machine 3 includes a grinding mechanism 1 and a coolant supply mechanism 2. The grinding mechanism 1 has a grinding function. The coolant supply mechanism 2 supplies coolant 100 (refer to Fig. 3) to the grinding mechanism 1. The coolant 100 that has been supplied to the grinding mechanism 1 from the coolant supply mechanism 2 to grind the gear workpiece is collected and filtered by the coolant supply mechanism 2. Then, the temperature of the coolant 100 is adjusted so that the coolant 100 is supplied to the grinding mechanism 1 again. In this manner, the coolant 100 is circulated within the gear grinding machine 3.

As shown in Fig. 1, a column 12 is arranged on a machine base 11 of the grinding mechanism 1 of the gear grinding machine 3. The column 12 is moved in a X-axis direction of Fig. 1 by a motor (not shown). The column 12 supports a lifting table 15 that is moved up and down in a Z-axis direction, which is the vertical direction, by a motor 14. The lifting table 15 supports a rotation table 16. A motor 13 rotates the rotation table 16 about the axis of the X-axis direction to change the position of the rotation table 16. The rotation table 16 supports a support table 17 that can be moved by a motor 20 in a Y-axis direction of Fig. 1. The support table 17 supports a grindstone driving motor 18. The output shaft of the grindstone driving motor 18 forms a grindstone shaft 19. A grindstone tool 21 is mounted on the grindstone shaft 19. The outer circumferential surface of the grindstone tool 21 has a grinding thread 24. Thus, the grindstone tool 21 is rotated about the grindstone shaft 19. Further, when the rotation table 16 is rotated about the axis in the X-direction, the angle of the grindstone shaft 19 with respect to the X-axis direction is adjusted.

As shown in Fig. 1, the machine base 11 includes a workpiece shaft 22 that is rotated about the axis in the Z-axis direction by a motor (not shown). A gear workpiece 23 is supported at the upper end of the workpiece shaft 22.

As shown in Figs. 2 and 3, when teeth 26 of the gear workpiece 23 are meshed with the thread 24 of the grindstone tool 21, the teeth 26 and the thread 24 are rotated in the direction of arrow 103 and the direction of arrow 104 shown in Fig. 2, respectively. Thus, tooth surfaces 27 of the teeth 26 of the gear workpiece 23 are newly ground by a thread surface 25 of the thread 24 of the grindstone tool 21. This allows each tooth surface 27 to have an involute shape and improves the surface roughness of the tooth surface 27. Fig. 1 illustrates a state in which the column 12 is moved backward in the X-axis direction and the grindstone tool 21 is separated from the gear workpiece 23.

As shown in Figs. 2 to 4, a coolant discharge member 31 is arranged on a meshing start side of the meshing portion between the grindstone tool 21 and the gear workpiece 23. The coolant 100 is discharged from the discharge port 32 at the tip of the coolant discharge member 31 and supplied to the meshing portion. The discharge port 32 is located on the meshing start side of the meshing portion between the thread 24 of the grindstone tool 21 and the teeth 26 of the gear workpiece 23 and on the trailing side of the meshing portion in the rotation direction of the gear workpiece 23. The discharge port 32 is located on the outer circumferential side of the gear workpiece 23. The discharge port 32 is located at least partially at the same position as a plane of rotation for the gear workpiece 23, that is, at the height of the gear workpiece 23. The height of the gear workpiece 23 refers to the position of the gear workpiece 23 in a direction in which an axis α of the gear workpiece 23 extends. Thus, the discharge port 32 is located at least partially at the same position as the gear workpiece 23 in the direction in which the axis α of the gear workpiece 23 extends. A space 101 between the gear workpiece 23 and the grindstone tool 21 located on the meshing start side opens toward the trailing side in the rotation direction of the gear workpiece 23 and narrows toward the meshing portion. The discharge port 32 is located relatively close to and opposed to the space 101. Further, on the meshing starting side, the discharge port 32 is directed to the tooth surfaces 27 on the trailing side in the rotation direction of one or more teeth 26 that are respectively located in the thread grooves 29 of the grindstone tool 21. The tooth surfaces 27 on the trailing side in the rotation direction are tooth surfaces 27 oriented in a direction opposite to the rotation direction of the gear workpiece 23. Thus, the coolant 100 from the discharge port 32 is supplied to the tooth surfaces 27 on the trailing side of the teeth 26 located in the thread grooves 29 of the gear workpiece 23 in the rotation direction.

### Operation of Embodiment

The operation of the present embodiment will now be described.

In the present embodiment, as shown in Figs. 2 to 4, during grinding of the tooth surfaces 27 of the teeth 26 of the gear workpiece 23, the gear workpiece 23 is meshed with the grindstone tool 21. The angle of the grindstone tool 21 is adjusted about the X-axis depending on the lead angle of the thread 24. In this meshing state, the grindstone tool 21 is rotated in the direction of arrow 103, and the gear workpiece 23 is rotated in the direction of arrow 104. In this case, the grindstone tool 21 is rotated in a direction in which the thread 24 enters a tooth groove 28 of the gear workpiece 23 from above. When the grindstone tool 21 and the gear workpiece 23 in the engaged state are rotated, the tooth surfaces 27 of the teeth 26 of the workpiece 23 are ground by the thread 24 of the grindstone tool 21.

When the gear workpiece 23 is ground, the coolant 100, which is circulated between the coolant supply mechanism 2 and the grinding mechanism 1, is discharged from the discharge port 32. The discharged coolant 100 is supplied to the tooth surfaces 27 of the teeth 26 in the thread grooves 29 through the space 101, which is located on the meshing start side of the meshing portion between the grindstone tool 21 and the gear workpiece 23. In this case, the discharged coolant 100 is supplied toward the meshing portion from the trailing side in the rotation direction of the gear workpiece 23 at the same height as the gear workpiece 23. Thus, the coolant 100 supplied toward the tooth surfaces 27 is drawn into the entire meshing part between the grindstone tool 21 and the gear workpiece 23, due to the rotation of the gear workpiece 23 and the movement of the thread 24 of the grindstone tool 21 in the direction in which the axis β extends. The movement of the thread 24 refers to the movement of the thread 24 in the direction of the axis β by helical rotation of the thread 24 caused by the rotation of the grindstone tool 21.

Accordingly, the coolant 100 is used to lubricate and cool sliding portions between the thread surfaces 25 of the thread 24 and the tooth surfaces 27 of the teeth 26 at the meshing portion and to discharge chips. The grindstone tool 21 is raised and lowered by elevating the lifting table 15 such that uniform grinding is performed over the entire tooth width of the gear workpiece 23. Since the discharge port 32 follows this elevation, the coolant 100 is uniformly supplied to the entire tooth surfaces 27.

As described above, the rotation of the gear workpiece 23 and the grindstone tool 21 draws the coolant 100 into the meshing portion from the outer circumferential side of the gear workpiece 23 through the meshing start side. Thus, unlike when the coolant 100 is supplied in the direction in which the axis α of the gear workpiece 23 extends, a relatively small amount of the coolant 100 is scattered around. Accordingly, even when the discharge amount of the coolant 100 is relatively small, a sufficient amount of the coolant 100 is supplied to the meshing portion for lubrication, cooling, and chip discharge. This significantly reduces the amount of the coolant 100 used. Preferably, the circumferential speed of the tooth 26 is not greatly different from the speed at which the coolant 100 is supplied to the tooth surface 27. Most preferably, these speeds are equal to each other.

A conventional method for supplying the coolant 100 in the axial direction of the gear workpiece 23 and the method used in the embodiment were performed under the same grinding condition. Then, the amount of coolant supply that results in equal grinding accuracy of the obtained tooth surfaces 27 was measured. Also, the power consumption in that case was measured.

### Grinding Conditions

Diameter of grindstone tool: 300 mm (millimeters)
Number of thread starts of grindstone tool: 4
Rotation speed of grindstone tool: 4100 rotations per minute
Outer diameter of gear workpiece: 120 mm
Number of teeth of gear workpiece: 39
Modules of gear workpiece: 3
Rotation speed of gear workpiece: 421 rotations per minute
Machining time of gear workpiece: 8 minutes and 47 seconds

### Measurement Results

The supply amount of the coolant 100 necessary for achieving the same grinding accuracy in the conventional method and the method of the embodiment on the above condition is as follows.
Coolant supply amount per minute in conventional method: 200 liters
Coolant supply amount per minute in method of embodiment: 50 liters

Thus, the method of the embodiment allows the supply amount of the coolant 100 to be set to one-fourth of that of the conventional method.

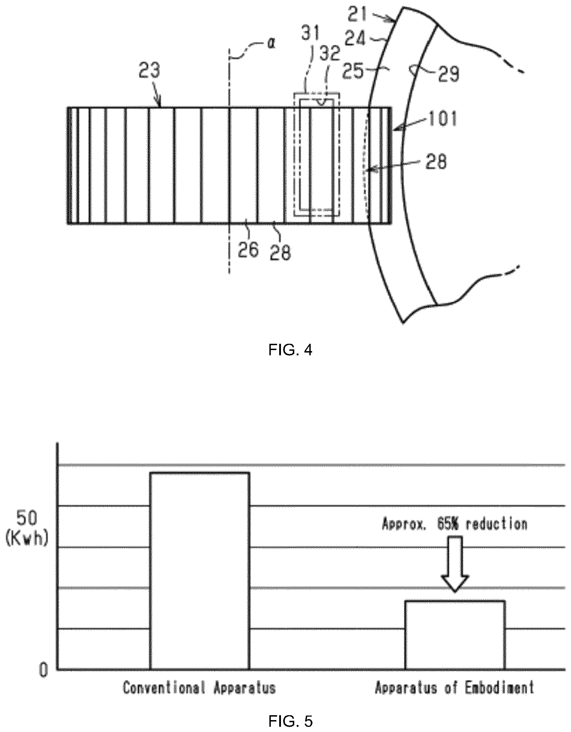

Fig. 5 illustrates the measured power consumption in the gear grinding machine of the present embodiment and the conventional gear grinding machine during the grinding under the above condition. As evident from Fig. 5, the power consumption in the gear grinding machine of the embodiment is reduced by about 65 percent compared to the conventional gear grinding machine.

### Advantages of Embodiment

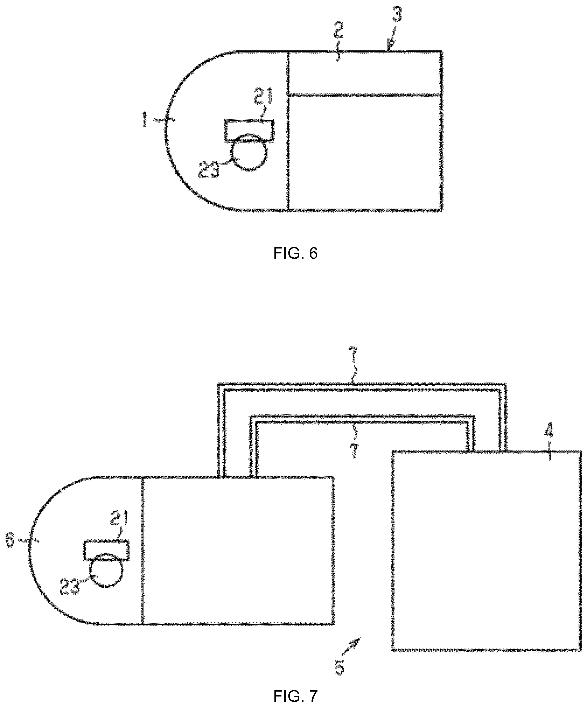

The advantages of the present embodiment will now be described.
(1) The coolant 100 is efficiently drawn into the meshing portion between the grindstone tool 21 and the gear workpiece 23 with less waste. This reduces the amount of the coolant 100 supplied to the meshing portion. Thus, the circulation amount of the coolant 100 required for the grinding process is reduced. As a result, the amount of the coolant used for gear grinding is saved.
(2) As described above, the circulation amount of the coolant 100 is reduced. Thus, the circulation path for the coolant 100 in the gear grinding machine 3 is made compact. Further, a low-output, small-sized motor can be used to drive the circulation and discharge of coolant. Furthermore, since the circulation amount of the coolant 100 is relatively small and the output of the motor is relatively low, the motor generates a relatively small amount of heat. This reduces the size of a cooling unit of the coolant 100. In particular, a relatively small amount of coolant used and a small amount of coolant circulated result in the reduction in size of a reservoir tank for coolant that typically requires a relatively large installation space. Accordingly, in the embodiment, the coolant supply mechanism 2 is reduced as shown in Fig. 6. This reduces the size of the entire gear grinding machine 3 and thus reduces the area occupied by the gear grinding machine 3 in a factory. By contrast, as shown in Fig. 7, a coolant supply mechanism 4, which executes the conventional coolant supply method, is normally increased in size as a whole. Thus, a gear grinding machine 5, which implements the conventional coolant supply method, occupies a relatively large space in a factory. Accordingly, in order to provide workspaces for maintenance or the like of the gear grinding machine and passageways in a factory, the coolant supply mechanism 4 is generally separate from the grinding mechanism 6. When they are separated in this manner, the two mechanisms 4, 6 are connected to each other by coolant pipes 7. Thus, additional space is needed for the coolant pipes 7.
(3) The coolant 100 is supplied toward the teeth 26 of the gear workpiece 23 in the thread grooves 29 of the grindstone tool 21. Thus, most of the coolant 100 is retained in the thread grooves 29 of the grindstone tool 21. This reduces the amount of the coolant 100 scattered around the gear workpiece 23 and increases the amount of the coolant used for the meshing portion between the grindstone tool 21 and the gear workpiece 23.
(4) There is no need to increase the circulation amount of the coolant 100. Thus, as described above, the motor for circulation driving may be a low-output one. In practice, an inverter control motor having the same configuration consumes power by 10 percent or smaller as compared to the conventional supply method. Consequently, as shown in Fig. 5, the power consumption of the entire gear grinding machine is significantly reduced as compared to the conventional method, thereby achieving energy conservation.
(5) Even with a reduced discharge amount of the coolant 100, a relatively large amount of the coolant 100 is supplied to the meshing portion between the grindstone tool 21 and the gear workpiece 23. This facilitates chip discharge. Thus, water-soluble coolant 100 that is easy to handle and is inexpensive is usable.
(6) Even with an increased discharge amount of the coolant 100, unnecessary scattering of the coolant 100 is limited so that the coolant 100 can be effectively used. That is, the coolant 100 that has been discharged from the discharge port 32 is positively drawn by rotation of the gear workpiece 23 and the grindstone tool 21 into the meshing portion, without much scatter. Thus, lubrication, cooling, chip discharge, and the like are effectively performed. This allows for high-speed machining in gear grinding and thus allows for efficient grinding.
(7) Since the means for obtaining the above advantages involves only setting the discharge position and direction of the discharge port 32 relative to the meshing portion, there is no increase in the number of components. Thus, an extremely simple configuration is provided.

### Second Embodiment

A second embodiment of the present invention will now be described. The differences from the first embodiment will mainly be discussed.

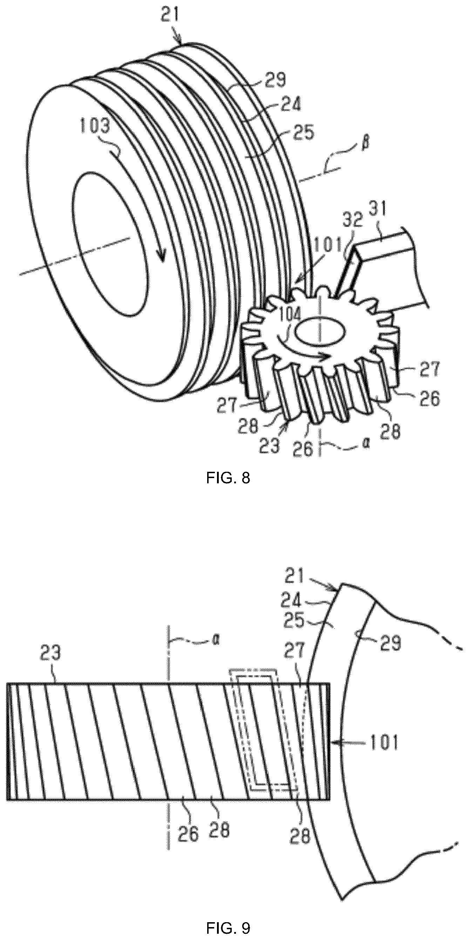

In the second embodiment, as shown in Figs. 8 and 9, the gear workpiece 23 is a spur gear and includes straight teeth 26 that are inclined with respect to the axis α of the gear workpiece 23. In this case, the rotation of the rotation table 16 causes the angle of the grindstone tool 21 to be adjusted with respect to the X-axis depending on the inclination angles of the straight teeth 26. Then, the rotation of the rotation table 16 causes the discharge port 32 to incline in correspondence with the grindstone tool 21. That is, the discharge port 32 is inclined with respect to the axis of the gear workpiece 23 so as to be inclined in the same direction as the inclination direction of the tooth surfaces 27 of the straight teeth 26 from the position of the outer circumferential surface of the gear workpiece 23.

In the second embodiment, in the same manner as the first embodiment, the rotation of the gear workpiece 23 and the grindstone tool 21 allows the coolant 100 to be effectively drawn into the meshing portion between the grindstone tool 21 and the gear workpiece 23. Thus, the same advantages as those of the first embodiment are obtained.

### Third Embodiment

A third embodiment of the present invention will now be described. The differences from the first embodiment will mainly be discussed.

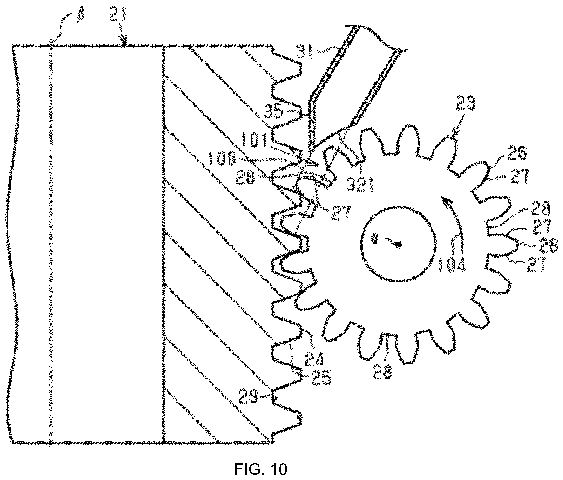

In the third embodiment, as shown in Fig. 10, the discharge port 32 of the coolant discharge member 31 is shaped in conformance with the rotation trajectory of the addendum circle of the gear workpiece 23 (i.e., the movement trajectory of the tip of each tooth 26). That is, an arcuate portion 321 is formed at the upper edge and the lower edge of the discharge port 32. The arcuate portion 321 extends along the rotation trajectory of the addendum circle without coming into contact with the top lands of the gear workpiece 23. The tip of the discharge port 32 includes a contact avoidance portion 35. The contact avoidance portion 35 is spaced apart from the outer circumferential surface of the grindstone tool 21 and extends in the direction of the axis β. This prevents the grindstone tool 21 from contacting the coolant discharge member 31.

Thus, in the third embodiment, the distance between the space 101 and the discharge port 32 is reduced. This further reduces the amount of scattering of the coolant 100 to portions other than the meshing portion. As a result, the amount of the coolant 100 supplied to the meshing portion is further increased accordingly.

Hence, the third embodiment provides the advantages of the first embodiment more effectively.

### Modifications

The above embodiments may be modified as follows. The above embodiments and the following modifications can be combined as long as the combined modifications remain technically consistent with each other.

The discharge port 32 for the coolant 100 may include apertures. This allows the coolant 100 to be ejected in a shower-like manner.

Microbubbles or ultra-fine bubbles may be mixed in the coolant 100. This improves the cooling effect of the coolant 100 and thus allows chips to be removed more smoothly.

The coolant 100 may be supplied through the space 101 from a position diagonally above the gear workpiece 23 to the tooth surfaces 27 on the trailing side in the rotation direction of the teeth 26 located in the thread grooves 29 of the gear workpiece 23.

The gear workpiece 23 and the grindstone tool 21 may be arranged such that the axis α of the gear workpiece 23 extends in the lateral direction (for example, X-axis direction).

The gear workpiece may have inner teeth. The grindstone tool used in this case is a barrel-shaped member having an inclined axis with respect to the axis of the gear workpiece. Further, the discharge port of the coolant discharge member is located inside the gear workpiece at a position relatively close to the space between the grindstone tool and the gear workpiece at the meshing start side between the grindstone tool and the gear workpiece. The discharge port is oriented toward the teeth surface located on the trailing side in the rotation direction of the teeth of the gear workpiece.

### REFERENCE SIGNS LIST

3) Gear Grinding Machine
21) Grindstone Tool
23) Gear Workpiece
24) Thread
26) Tooth
27) Tooth Surface
28) Tooth Groove
29) Thread Groove
31) Coolant Discharge Member
32) Discharge Port
100) Coolant
101) Space
α) Axis
β) Axis

## Claims

1. A grinding method for grinding a tooth surface of a gear workpiece using a gear grinding machine, the gear grinding machine comprising a grindstone tool having an outer circumference that includes a grinding thread, the grinding method comprising:
grinding the tooth surface by rotating the grindstone tool and the gear workpiece in a state in which the thread is meshed with teeth of the gear workpiece; and
supplying coolant toward the tooth surface from a trailing side in a rotation direction of the gear workpiece through a space between the gear workpiece and the grindstone tool, the space being located on a meshing start side of a meshing portion between the thread and the teeth.

2. The grinding method according to claim 1, wherein the coolant is supplied from a discharge port located at least partially at the same position as the gear workpiece in a direction in which an axis of the gear workpiece extends.

3. The grinding method according to claim 1, wherein the coolant is supplied to a tooth located in a thread groove of the grindstone tool.

4. The grinding method according to claim 1, wherein the coolant is water-soluble.

5. A gear grinding machine, comprising:
a grindstone tool having an outer circumference that includes a grinding thread; and
a coolant discharge member having a tip that includes a discharge port that discharges coolant, wherein
the gear grinding machine is configured to grind a tooth surface of the gear workpiece by rotating the grindstone tool and the gear workpiece in a state in which the thread is meshed with teeth of the gear workpiece and supply the coolant from the discharge port to a meshing portion between the thread and the teeth, and
the discharge port is located on a meshing start side of the meshing portion, the discharge port being configured to supply coolant toward the tooth surface from a trailing side in a rotation direction of the gear workpiece through a space between the gear workpiece and the grindstone tool.

6. The gear grinding machine according to claim 5, wherein the discharge port is located at least partially at the same position as the gear workpiece in a direction in which an axis of the gear workpiece extends.

7. The gear grinding machine according to claim 5, wherein the discharge port is arranged such that the coolant is supplied to a tooth located in a thread groove of the grindstone tool.

8. The gear grinding machine according to claim 5, wherein the discharge port is shaped along a rotation trajectory of an addendum circle of the gear workpiece.
